# EUROPÄISCHE PATENTSCHRIFT

(11) **EP 1 295 353 B1**
(45) Veröffentlichungstag und Bekanntmachung des Hinweises auf die Patenterteilung: **27.10.2004**
(21) Anmeldenummer: 01956508.4
(22) Anmeldetag: 29.06.2001
(51) Int. Cl.: H01M 8/12, H01M 4/88

(54) **VERFAHREN ZUR HERSTELLUNG EINER ELEKTRODE MIT TEMPERATURBESTÄNDIGER LEITFÄHIGKEIT**
METHOD FOR PRODUCING AN ELECTRODE THAT HAS A TEMPERATURE-STABILIZED CONDUCTIVITY
PROCEDE POUR PRODUIRE UNE ELECTRODE A CONDUCTIVITE A CONSTANCE THERMIQUE

(30) Priorität: 30.06.2000 DE 10031102
(43) Veröffentlichungstag der Anmeldung: 26.03.2003
(73) Patentinhaber: Forschungszentrum Jülich GmbH, 52425 Jülich (DE)
(72) Erfinder: SIMWONIS, Dimitrios, GR-151 27 Melissia (GR); TIETZ, Frank, 52428 Jülich (DE); BUCHKREMER, Hans-Peter, 52525 Heinsberg (DE)
(74) Vertreter: Gille Hrabal Struck Neidlein Prop Roos
(86) Internationale Anmeldenummer: PCT/EP2001/007475
(87) Internationale Veröffentlichungsnummer: WO 2002/003491

(56) Entgegenhaltungen:
- DE-A- 19 637 261
- US-A- 3 300 344
- DATABASE INSPEC [Online] INSTITUTE OF ELECTRICAL ENGINEERS, STEVENAGE, GB; MATSUSHIMA T ET AL: "Change of physical properties of Ni/YSZ cermets by the continuous reduction solid oxide fuel cell anodes" Database accession no. 5815306 XP002182366 & TRANSACTIONS OF THE INSTITUTE OF ELECTRICAL ENGINEERS OF JAPAN, PART B, NOV. 1997, INST. ELECTR. ENG. JAPAN, JAPAN, Bd. 117-B, Nr. 11, Seiten 1488-1496, ISSN: 0385-4213

## Beschreibung

Die Erfindung betrifft ein Verfahren zur Herstellung einer Elektrode für den Einsatz bei hohen Temperaturen. Ein keramischer Schlicker wird bereitgestellt, der ein Metalloxidpulver sowie ein Feststoffelektrolytpulver beinhaltet. Aus dem Schlicker wird ein Elektrodengrünkörper geformt. Der Grünkörper wird getrocknet und gesintert. Anschließend wird das Metalloxid zu Metall reduziert, wobei die Reduzierung auch während des Einsatzes.in zum Beispiel einer Hochtemperaturbrennstoffzelle erfolgen kann.

Als Feststoffelektrolyt wird beispielsweise stabilisiertes Zirkoniumdioxid und als Metalloxid beispielsweise Nickeloxid vorgesehen.

Das Kernstück einer Hochtemperaturbrennstoffzelle (HTBZ), die sich durch die direkte Umsetzung von chemischer Energie (in Form von brennbaren Gasen) in elektrische Energie auszeichnet, besteht aus einem Feststoff-Elektrolyten, auf dem eine Anode und eine Kathode aufgebracht sind. Die Betriebstemperatur liegt zwischen 750 und 1000 °C. Auf der Anodenseite erfolgt die Verbrennung eines brennbaren Gases unter Sauerstoffverbrauch. Die Anode besteht z.B. aus einem Gemisch aus Nickel und Y₂O₃-stabilisiertem Zirkoniumdioxid (YSZ), um die geforderte elektronische und ionische Leitfähigkeit zu gewährleisten. Die Struktur solcher Anoden muss gasdurchlässig sein, andererseits muss aber die hohe elektrische Leitfähigkeit gegeben sein. Dazu muss trotz der hohen Porosität die Ni-Phase untereinander und die YSZ-Phase untereinander Kontakt haben. Diese Struktur sollte im Betrieb bei 750 bis 1000 °C nicht altern, d.h. ihre Eigenschaften möglichst nicht verändern, um eine optimale Energieausbeute zu erhalten.

In Hochtemperaturbrennstoffzellen werden als Anodenmaterialien häufig Ni/YSZ-Cermets eingesetzt, die erstmals von der Fa. Westinghouse in den sechziger Jahren beschrieben wurden. Eine gängige Mischung beinhaltet 30 Vol.-% Ni bezogen auf das gesamte Feststoffvolumen. Die Leitfähigkeit fällt unterhalb dieses Ni-Gehalts um etwa vier Größenordnungen ab [siehe Druckschrift: Ivers Tiffée E.. Wersing W.. Schießl M., Ber. Bunsenges. Phys. Chem., 94. (1990), S. 978]. Oberhalb dieser Grenze wurde keine erhebliche Steigerung der elektrischen Leitfähigkeit über 3500 S·cm in Cermets gefunden [siehe Druckschrift: Dees D.W.- Claar T.D., Easler T.E., Fee D.C.. Mrazek F.C., Journal of Electrochem. Soc., 34 ( 1987), S. 1241]. Stand der Technik sind also durchgängig poröse und leitfähige Anodencermets und Anodenfunktionsschichten, die im wesentlichen neben einem Feststoffelektrolyten wie z.B. YSZ (8 - 11 mol-% stabilisiertes Zirkoniumdioxid) etwa 30 Vol.-% Ni enthalten. Damit ist eine elektronische (Ni) und eine ionische Leitfähigkeit (stabilisiertes Zirkoniumdioxid) gegeben. Mit dieser Mischung ist weiterhin der Ausdehnungskoeffizient der Anode an den des Elektrolyten angepasst. Dabei gilt eine sogenannte Anodenfunktionsschicht als Übergangszone zwischen der eigentlichen Anode und dem gasdichten Sauerstoffionen leitenden Elektrolyten in der Hochtemperaturbrennstoffzelle. Besonders der Anteil der Dreiphasengrenzen von elektrisch leitfähigem Nickel, brenngasgefülltem Porenraum und sauerstoffionenleitfähigem YSZ bestimmt die Effizienz einer Anode. Ihre Hauptaufgabe ist die Aufnahme der Elektronen, die die Sauerstoffionen bei ihrem Austritt aus dem Peststoffelektrolyten in die Gasphase abgeben.

In den letzten Jahren werden zahlreiche Tests zur Alterungsbeständigkeit der Anodenstrukturen unternommen. Es wurde festgestellt, dass bei Langzeiteinsatz der Anoden unter Betriebstemperatur (750 - 950°C) die Leitfähigkeit der Anoden verstärkt abnimmt. Nach Auslagerung der Anoden im Brenngasgemisch (Ar 4% H₂: 4%H₂O) für 2000 Stunden wurde ein Abfall der effektiven elektrischen Leitfähigkeit von 20 - 40% der anfänglichen Leitfähigkeit bei Raumtemperatur gemessen. Dies konnte mit einer Tendenz des Nickels zur Minimierung der Oberflächenenergie erklärt werden [siehe Druckschrift: Tsoga A., Naoumidis A., Nikolopoulos P., "Wettability under non reactive and reactive conditions in the system Ni/YSZ and Ni/Ti-TiO₂/YSZ" NATO ASI Ser., Ser. 3 1998. 58, S. 79-86]. Thermisch aktiviert neigt die Ni-Phase in der Anode zur Agglomeratbildung. Dadurch reißen insbesondere im Bereich großer Poren die anfangs feinverteilten Ni-Kanäle ab. Dadurch ist das Ni-Netz nicht mehr so fein verteilt, einige Strompfade werden unterbrochen, und es kommt zu einem Abfall der Leitfähigkeit. Weiterhin nimmt auch die Anzahl der Dreiphasenpunkte in der Anodenfunktionsschicht ab, und es wird die Effizienz der gesamten Hochtemperaturbrennstoffzelle erheblich herabgesetzt.

Das beschriebene Phänomen zum Abfall der elektrischen Leitfähigkeit wurde bisher unabhängig vom Herstellungsverfahren der Anode und oder Anodenfunktionsschicht (Kalandern, Coat-Mix-Verfahren mit Thermokompression, Foliengießen und Siebdrucksowie Vakuumschlickergussschichten oder Plasmaspritzschichten) mehr oder weniger ausgeprägt beobachtet, in jedem Falle aber im Sinne einer Wirtschaftlichkeit als störend betrachtet.

Die Aufgabe der Erfindung ist die Schaffung eines Verfahrens zur Herstellung einer Elektrode mit verringerter thermisch induzierten Abnahme der elektrischen Leitfähigkeit.

Die Aufgabe wird durch ein Verfahren mit den Merkmalen des ersten Anspruchs gelöst. Vorteilhafte Ausgestaltungen ergeben sich aus den Unteransprüchen.

Anspruchsgemäß weist der eingangs genannten Schlicker ein poröses vorzugsweise hartes Granulat aus Feststoffelektrolytmaterial auf. Der mittlere Durchmesser der Pulverkörner des Metalloxids übersteigt den mittleren Durchmesser der Poren des Granulats zumindest nicht wesentlich. Bezweckt wird hierdurch, dass Pulverkörner des Metalloxids in der Regel problemlos in die Poren des Granulats eindringen können.

Das poröse harte Granulat ist als poröses hartes Agglomerat mit Feststoffbrücken zu verstehen. Die Festigkeit des porösen harten Granulates sollte so fest sein, dass es die Foliengießschlicker-Aufbereitung im wesentlichen unbeschadet übersteht.

Es hat sich gezeigt, dass die Leitfähigkeit einer Elektrode dann wesentlich langzeitstabiler bei hohen Temperaturen ist, wenn Pulverkörner des Metalloxids in die Poren des harten Granulats vor dem Sintern zum Beispiel infolge eines Mischvorgangs eingedrungen sind.

Der benötigte Anteil an Metalloxidpulver im Schlicker hängt von den gewünschten Eigenschaften der Elektrode ab. Es kann dem Fachmann überlassen bleiben, hier den jeweiligen optimalen Anteil zu ermitteln. Die Untergrenze ist so zu wählen, dass die gewünschte elektrische Leitfähigkeit erzielt wird. Um dieses Ziel zu erreichen, unterschreitet der Metalloxidanteil in der Regel 20 Vol.-%, vorteilhaft 30 Vol.-% bezogen auf das gesamte Feststoffvolumen des Schlickers nicht.

Wie der Anteil an porösem vorzugsweise harten Granulat im Schlicker zweckmäßigerweise zur Erreichung einer langzeitstabilen Elektrode sein sollte, kann ein Fachmann ebenfalls mit wenigen Versuchen leicht feststellen.

Der Anteil an porösem Granulat liegt in der Regel bei 5 Vol% bis maximal 40 Vol% des Gesamtpulveranteils, typischerweise bei 5 - 50 Vol%. (Grund: unter 5 Vol% ist die Stabilisierungswirkung der Ni-Phase nicht erheblich - oberhalb von 40 Vol% ist ein ungenügendes Versintern zu erwarten, d.h. geringere Festigkeit).

Das Anodensubstrat und oder die Anodenfunktionsschicht weisen eine hohe Stabilität gegen eine, durch die Einsatztemperatur der Hochtemperaturbrennstoffzelle bedingte thermische Alterung der elektrischen Leitfähigkeit der Komponenten auf. Gemäß der Erfindung kann ein Anodencermet hergestellt werden, der nachweislich eine Verbesserung der Alterungsbeständigkeit um mehr als 6 % nach einer Auslagerung von 2000 h verglichen mit Anodensubstraten aus dem Stand der Technik zeigten.

Regelmäßig weist der Schlicker konventionelles Feststoffelektrolytpulver wie beim Stand der Technik auf, um die Sintereigenschaften zu verbessern.

Eine Anode für eine Hochtemperaturbrennstoffzelle wird erfindungsgemäß bevorzugt aus einer Mischung von NiO-Pulver und YSZ-Pulver und porösen harten YSZ-Granulaten hergestellt, da es sich hierbei um bewährte Materialien für den vorgesehen Einsatz handelt. Die mittleren Korngrößen der beiden genannten Pulver liegen typischerweise unterhalb von 1 µm. Die Erfindung zeichnet sich durch das Einbringen des entsprechend gröberen, ausreichend festen YSZ-Pulvergranulats mit einer Eigenporosität dieser Granulate aus. In diese durchgehend poröse Struktur der Granulate kann während der Aufbereitung der keramischen Masse das NiO Pulver teilweise eingemahlen werden. Das NiO-Pulver bleibt dort bis zur endgültigen Reduktion des NiO/YSZ-Substrats zum Ni/YSZ-Cermet verankert. Es entsteht ein Kanalsystem von leitfähigem, elementarem Nickel in den in der Anode homogen verteilten harten YSZ-Granulaten. Diese Ni-Strukturen in den inneren Kapillaren der YSZ-Granalien haben derart veränderte Oberflächen und Kontaktbedingungen gegenüber Ni-Anteilen, die außerhalb dieser Struktur sind, dass keine oder nur geringe Agglomeration des Nickels im Laufe der Zeit auftritt. Diese Mikrobereiche unterstützen ein stabiles Nickelnetz, das über Einsatzzeiten der Anode von mehr als 2000 h feinverteilt bleibt, nur wenig agglomeriert und die Alterung der elektrischen Leitfähigkeit extrem herabsetzt.

Die folgende genauere Beschreibung der Vorgehensweise erklärt die Zusammenhänge: Die keramische Mischung für das Anodencermet wird aus verschiedenen Pulvern und/oder Pulvermischungen hergestellt, aus denen der Formkörper bestehen soll. Als Beispiel wird hier ein Pulvergemisch aus einem mit mindestens 8 mol-% Yttrium stabilisierten Zirkondioxidpulver (YSZ) und einem NiO-Pulver verwendet. Es sind jedoch selbstverständlich auch andere Rohstoffe für den Einsatz als Festkörperelektrolyt oder Metalloxid in der Anode der Hochtemperaturbrennstoffzelle möglich. Zusätzlich werden vorteilhaft in Übereinstimmung mit dem Stand der Technik kommerzielle polymere Dispergatoren und Bindersysteme eingesetzt, wie sie beim Foliengießen eingesetzt werden. Der Anteil an YSZ gliedert sich nun entsprechend der Erfindung insbesondere in einen grobkörnigen Anteil und einen feinkörnigen Anteil. Die grobe Fraktion hat vorzugsweise eine mittlere Korngröße von ca. 10 µm bis 100 µm und hat einen speziellen porösen Aufbau. Die feine Fraktion < 1 µm dient zum Sintern.

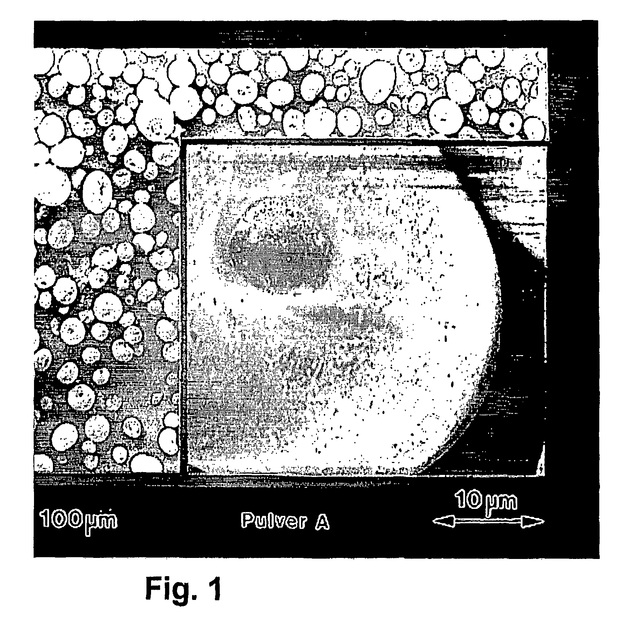

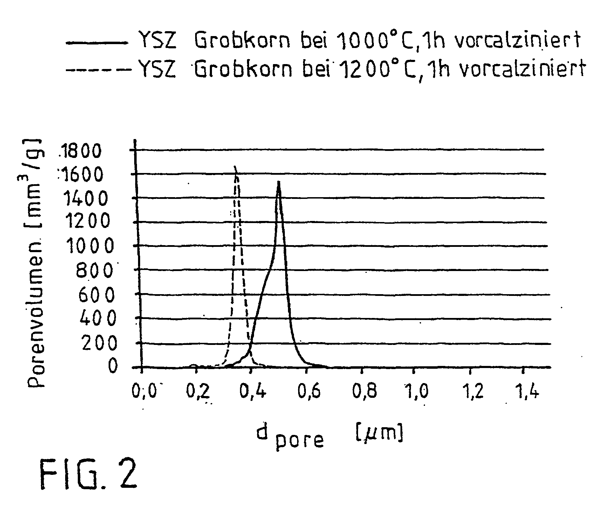

Die grobe Fraktion hat eine durchgängige Eigenporosität. Diese groben Anteile können Granulatkörner sein, die aus feinen Pulvern über eine Sprühtrocknung wie in Figur 1 dargestellt bzw. Aufbaugranulation hergestellt werden oder die über ein Kopräzipitationsverfahren mit anschließendem Versprühen der Pulversuspension im Sprühturm hergestellt werden. Aus solchen sogenannten weichen Agglomeraten, die unter Zugabe von Lösemittel wieder zerfallen, werden nun durch Kalzination harte Agglomerate hergestellt. Diese Temperaturbehandlung findet bei Temperaturen im Bereich 700 °C bis 1200 °C statt. Die dadurch entstehenden Agglomerate sind so hart, dass sie während der nachfolgenden Aufbereitung nicht vollständig zerstört werden. Eine teilweise Zerstörung kann vorteilhaft sein, da dann eine feinere Verteilung entsteht. Beim Kalzinieren entstehen also durch Versintern Agglomerate mit einer interkonnektierenden Eigenporosität, deren Porositätsgrad und mittlerer Porendurchmesser durch die Wahl des Ausgangsagglomerat und gezielte Wahl der Parameter beim Kalzinieren (Dauer und Maximaltemperatur) eingestellt werden kann. Die Porendurchmesser haben mittlere Werte zwischen 0,1 und 2,0 µm. Figur 2 zeigt die mittels Quecksilberdruckporosimetrie bestimmten Porositätskennwerte zweier bei unterschiedlichen Temperaturen kalzinierten Sprühkörner, die durch Sprühtrocknung aus einem YSZ-Pulver mit einer mittleren Korngröße von 0,2 µm und anschließender Kalzination hergestellt wurden. Die so erhaltenen kalzinierten Sprühkörner haben mittlere Durchmesser von 10 bis 500 µm, typischerweise von 10 - 50 µm.

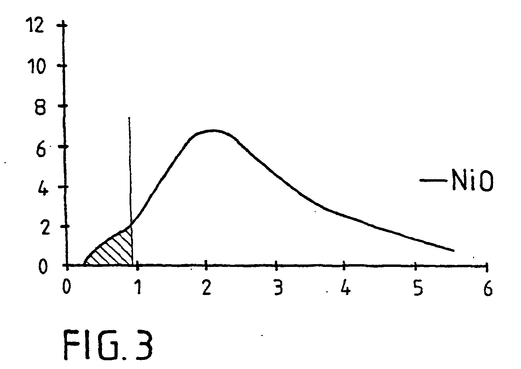

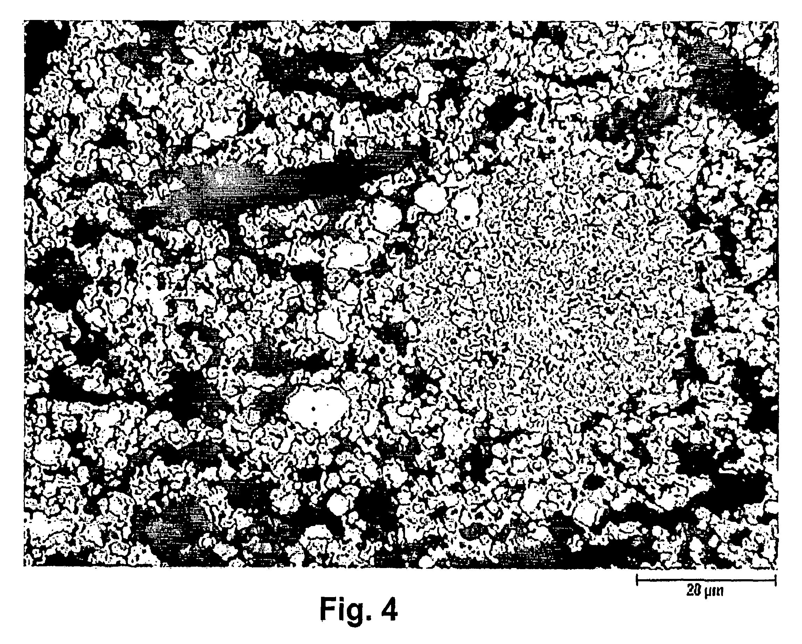

Anschließend werden bei der Aufbereitung des keramischen Schlickers das feine NiO-Pulver mit dem groben, porösen und harten YSZ-Granulat vermischt. Dabei hat sich überraschenderweise gezeigt, dass dabei der Feinstanteil des NiO-Pulvers in die Porenräume des harten YSZ-Granulatkorns gelangt und dort verankert wird. Dazu wird vorteilhaft bei der Herstellung der Schlicker auf die Reihenfolge der Zugabe der einzelnen Komponenten geachtet: Besonders günstig ist die Reihenfolge zuerst Dispergieren von Metalloxid, dann Zugabe und Dispergieren des groben, porösen und harten Granulats des Feststoffelektrolyten und anschließend Zugabe und Dispergierung des Feinanteils des Feststoffelektrolyten. Möglich ist auch die Reihenfolge poröses, hartes Granulat, Nickeloxid, Feinkorn. So wird erreicht, dass das Metalloxid und nicht das Feststoffelektrolytpulver bevorzugt in die Poren des harten Granulats gelangt. Figur 3 zeigt ein Beispiel für eine breite Korngrößenverteilung eines NiO-Pulvers mit Feinstanteil (schraffiertes Feld). Dieser Feinstkornanteil des NiO von < 1 µm wird in dem kalzinierten, porösen YSZ-Grobkorn eingebaut. In Figur 4 ist im reduzierten Zustand das feinverteilte Nickel (weiß) in einem harten YSZ-Granulatkorn 1 grau) gut zu erkennen.

Die Aufbereitung der keramischen NiO-YSZ-Schlicker erfolgt in Kugelmühlen, Attritoren oder anderen in der Keramik üblichen Aufbereitungsgeräten. Es kommen Mahlkörper unterschiedlicher Größen (Durchmesser 1 mm bis Durchmesser 20 mm oder auch größer) zum Einsatz. Weiterhin ist nach der abgeschlossenen Vermischung der anorganischen Pulveranteile die Zugabe von ausbrennbaren Platzhaltern, wie Kohlenstoff oder Kohlenstofffasern zum Erhalt der porösen Gesamtstruktur des Anodensubstrats zweckmäßig. Dies hat hier speziell den Vorteil, dass die Kohlenstoffaktivität in metallischen Schmelzen (wie Ni) die Reduktion der Oxide direkt am Interface bedingt. Dies führt zu einer besseren Benetzung des YSZ durch das Ni. Die beschriebenen Schlicker können nun über das Foliengießverfahren oder den Siebdruck zu Anoden verarbeitet werden. Es können aber auch Massen wie Sprühtrockungsschlicker für das Trockenpressen oder Schlickergießen, plastische Massen für das Extrudieren, Kalandern oder den Spritzguss sowie Massen für beliebige andere Formgebungsverfahren auf die erfindungsgemäße Weise hergestellt werden. Anschließend erfolgt das Trocknen der Körper und das Sintern. Für den beschriebenen Fall wurde im Temperaturbereich 1400 -1450 °C gesintert.

Als Resultat entsteht ein Anodencermet mit einer feinverteilten Mikrostruktur aus einer Ni-Phase, einer YSZ-Phase und einer durchgängigen Porenstruktur, wie es für die Anwendungen für die Hochtemperaturbrennstoffzelle erwünscht ist. Die beschriebene Struktur führt zur Verbesserung der Alterungsstabilität hinsichtlich der elektrischen Leitfähigkeit. Diese mit Nickel gefüllten und homogen in der Anode verteilten harten Granulatkörner aus YSZ stellen in dem Ni YSZ-Cermet-Skelett eine äußerst alterungsstabile Komponente dar. Das Grund dafür ist, dass die Nickelphase durchgehend ist, aber fest in den Kanälen gehalten wird und damit durch Kapillarkräfte der Agglomerationsprozess der Alterung der Ni-Phase (Tendenz zur Minimierung der Oberflächenenergie) verhindert wird. Dabei stellen feinste Verästelungen der Ni-Phase nach außen einen guten Kontakt aus dem Granulatkorn heraus zum Gesamtcermet sicher, so dass eine gute Leitfähigkeit ( < 3000 S·cm bei Raumtemperatur) an diesen Proben nachgewiesen werden konnte. Weiterhin wird das Benetzungsverhalten von Ni auf der YSZ-Oberfläche durch die direkte Anwesenheit von elementarem Kohlenstoff verbessert. Das führt in Kombination mit der starken Vernetzung der YSZ- und Ni-Phase innerhalb der Grobkörner zu einer verbesserten Alterungsbeständigkeit, die sich in einem sehr geringen Abfall der Leitfähigkeit nach 2000 h von nur 13% der Anfangsleitfähigkeiten bei Raumtemperatur verdeutlicht. Bei anderen Anodenmaterialien, die nach dem derzeitigen Stand der Technik hergestellt wurden, wurde nach 2000 h ein Abfall der Leitfähigkeit von 19% oder mehr festgestellt.

Der der Erfindung zugrundeliegende besondere Gedanke besteht also in dem zusätzlichen Einbringen von groben, schwammartigen YSZ-Partikeln mit Eigenporosität, deren mittlere Korngröße vorteilhaft um mindestens ein 10-faches größer als der Feinstanteil des NiO Pulvers ist. Der der Erfindung zugrundeliegende besondere Gedanke besteht weiterhin im Einbringen durch z.B. Einmischen von feinem NiO-Pulver in die Porenstruktur der YSZ-Granulate. Es ist Merkmal der aus derartigen Mischungen hergestellten Anoden, dass die genannten NiO-gefüllten YSZ-Granulen in der Anode fein verteilt sind und auch nach der Reduktion des NiO zur leitfähigen Ni-Phase eine durchgängige Ni-Struktur vorliegt. Durch diese Nigefüllten YSZ-Teilbereiche im Cermet und entsprechende Maßnahmen bei der Aufbereitung der keramischen Massen mit dem Ziel des Erhalts einer feinverteilten Mikrostruktur, wird eine sehr alterungsbeständige Struktur hinsichtlich der elektrischen Leitfähigkeit erreicht.

Im folgenden wird das Verfahren an einem Beispiel näher erläutert. Ausgangsmaterialien sind 336g Nickel(II)-oxid-Pulver und 264g YSZ-Pulver. 80g bestehen aus grobkörnigem YSZ-Pulver, 184 g stellen ein feinkörniges YSZ-Pulver dar. Das grobe YSZ-Pulver wurde aus einem Pulver "TZ-8Y" ( Fa. Tosoh. Japan) gewonnen, indem dieses vom Hersteller bereits sprühgranulierte Pulver bei Temperaturen oberhalb von 700 °C vorkalziniert wurde. Das grobe YSZ weist eine mittlere Korngröße von > 10 µm auf. Das feine YSZ hat eine mittlere Korngröße von ca. 0,5 µm.

Diese Pulver werden in ein mit Dispergator versehenes Lösemittel oder Lösungsmittelgemisch (Wasser, Ethanol, MEK, Toluol oder andere) gegeben oder im Lösemittel oder Lösemittelgemisch über pH-Wert-Einstellung stabilisiert. Die Zugabereihenfolge gilt wie folgt für das Beispiel Ethanol-Toluol-Lösemittelgemisch: Vorlegen des Lösemittelgemisches, Hinzufügen des Dispergators, anschließend des NiO-Pulvers. Nach 5 min Mischen (z.B. Taumelmischer oder Kugelmühle) wird grobes hartes YSZ hinzugefügt (vorgetrocknet) und erneut gemischt, bevor das feine YSZ zugegeben wird. Die Reihenfolge kann auch grobes YSZ, NiO, feines YSZ sein. Allerdings richtet sich danach die Mischdauer nach dem zweiten Pulverzugabeschritt (5 min bis mehrere Stunden).

Nach diesem Mischverfahren gelangt der Feinstanteil des NiO-Pulvers in die durchgängigen Porenkanäle der groben YSZ-Granulate. Anschließend wird wie bei der üblichen Schlickerherstellung verfahren. Es werden in unterschiedlichen Zeitabständen Binder, Plastifizierer, ggf. Thermkompressionsbinder, Entschäumer und oberflächenaktive Substanzen zugegeben. Weiterhin wird der Mischung zur Porositätseinstellung Graphit zugemischt. Die so erhaltene keramische Masse wird ggf. durch Abziehen von Lösungsmittel in z.B. einem Rotationsverdampfer an die für weitere Verarbeitungen nötige Viskosität angepasst (Foliengießen: 1000 - 100000 mPas). Die Masse kann über Foliengießen, Folienziehen oder andere Dünn- oder Dickschichttechniken weiterverarbeitet werden. Die so erhaltenen Grünsubstrate und oder grünen Anodenfunktionsschichten werden nach vollständiger Trocknung bei Temperaturen bis zu 1500°C gesintert und anschließend in einem Ar-H₂-Gemisch zu den gewünschten Cermets oder Cermetschichten reduziert.

Das Prinzip der Herstellung und Stabilisierung einer metallischen Phase in oder an einer Fremdkomponente, wie zum Beispiel Oxidpulverteilchen (Oxidpulvermatrix) - hier speziell Feststoffelektrolytmaterial - gilt generell für Verbundwerkstoffe bzw. Cermets. Das Verfahren kann also universell angewendet werden, wenn eine Phase in die Poren einer anderen Phase mit dem Ziel der Stabilisierung der ersten Phase in der zweiten Phase eingebracht werden soll. Die vorteilhaften Ausgestaltungen zur Herstellung der Elektrode gelten auch für den allgemeinen Fall.

## Patentansprüche

1. Verfahren zur Herstellung einer Elektrode für den Einsatz bei hohen Temperaturen, bei dem aus einem keramischen Schlicker ein Grünkörper einer Elektrode gebildet wird, wobei der Schlicker aus wenigstens einem Feststoffelektrolytmaterial sowie einem Metalloxidpulver gebildet ist, der Grünkörper getrocknet und gesintert wird,
**dadurch gekennzeichnet, daß**
ein poröses Granulat aus Feststoffelektrolytmaterial im Schlicker eingesetzt wird, wobei der mittlere Durchmesser der Metalloxidpulverkörner den mittleren Durchmesser der Poren des Granulats nicht übersteigt oder nicht wesentlich übersteigt, so dass die Pulverkörner des Metalloxids problemlos in die Poren des Granulats eindringen können.

2. Verfahren nach Anspruch 1, bei dem der Metalloxidanteil im Schlicker wenigstens 20 Vol.-%, vorteilhaft wenigstens 30 Vol.-% beträgt.

3. Verfahren nach Anspruch 1 oder 2, bei dem der Granulatantell im Schlicker wenigstens 5 Vol.-%, vorteilhaft wenigstens 10 Vol.-% und/oder maximal 40 Vol.-% beträgt.

4. Verfahren nach einem der Ansprüche 1 bis 3, bei dem Nickeloxid als Metalloxid verwendet wird.

5. Verfahren nach einem der Ansprüche 1 bis 4, bei dem Yttrium stabilisiertes Zirkoniumdioxid als Festelektrolytmaterial verwendet wird.

6. Verfahren nach einem der vorhergehenden Ansprüche, bei dem ein Pulver aus Feststoffelektrolytmaterial zusätzlich zum Granulat eingesetzt wird.

7. Verfahren nach einem der vorhergehenden Ansprüche, bei dem die mittleren Durchmesser der Pulverkörner bis zu 1 µm betragen.

8. Verfahren nach einem der vorhergehenden Ansprüche, bei dem dem Schlicker Dispergatoren zugeben werden.

9. Verfahren nach einem der vorhergehenden Ansprüche, bei dem dem Schlicker ein Binder oder Bindersystem zugeben wird.

10. Verfahren nach einem der vorhergehenden Ansprüche, bei dem der mittlere Durchmesser der Granulatkörner wenigstens 10 µm beträgt.

11. Verfahren nach einem der vorhergehenden Ansprüche, bei dem der mittlere Durchmesser der Poren der Granulatkörner den mittleren Durchmesser der Metalloxidpulverkörner um wenigstens das fünffache, vorteilhaft um wenigstens das zehnfache übersteigt.

12. Verfahren nach einem der vorhergehenden Ansprüche, bei dem der mittlere Durchmesser der Granulatkörner den mittleren Durchmesser der Metalloxidpulverkörner um maximal das hundertfache übersteigt.

13. Verfahren nach einem der vorhergehenden Ansprüche, bei dem das Granulat kalziniert wird, bevor dieses dem Schlicker zugegeben wird.

14. Verfahren nach einem der vorhergehenden Ansprüche, bei dem das Granulat Poren mit einer mittleren Größe von 0,1 bis 2,0 µm aufweist.

15. Verfahren nach einem der vorhergehenden Ansprüche, bei dem das Granulat offenporig ist.

16. Verfahren nach einem der vorhergehenden Ansprüche, bei dem das Granulat eine so hohe Festigkeit aufweist, daß es die Foliengieß-Schlicker-Aufbereitung im wesentlichen unbeschadet übersteht.

17. Verfahren nach einem der vorhergehenden Ansprüche, bei dem der Schlicker durch folgende Schritte gebildet wird: Dispergieren von Metalloxidpulver, anschließend Zugabe und Dispergieren des Granulats des Feststoffelektrolyten und sich daran anschließend Zugabe und Dispergieren des Pulveranteils des Feststoffelektrolyten.

18. Verfahren nach einem der vorhergehenden Ansprüche, bei dem der Schlicker durch folgende Schritte gebildet wird: Dispergieren des Granulats des Feststoffelektrolyten, anschließend Zugabe und Dispergieren von Metalloxidpulver und sich daran anschließend Zugabe und Dispergieren des Pulveranteils des Feststoffelektrolyten.

19. Verfahren nach einem der vorhergehenden Ansprüche, bei dem der Grünling bei Temperaturen oberhalb von 1300°C, insbesondere oberhalb von 1400 °C gesintert wird.

## Claims

1. Method for producing an electrode for use at high temperatures, in which a green compact of an electrode is formed from a ceramic slurry, wherein said slurry consists of at least one solid electrolyte material as well as a metal oxide powder and wherein said green compact is dried and sintered,
**characterized in that**
a porous granulate made of a solid electrolyte material is used in the slurry, and the average diameter of the metal oxide powder grains is not larger or substantially larger than the average diameter of the pores of the granulates, so that the powder grains of the metal oxide may penetrate without any problem the pores of the granulate.

2. Method according to claim 1,
**characterized in that**
the metal oxide fraction in the slurry amounts to at least 20 vol.-%, and preferably to at least 30 vol.-%.

3. Method according to either of claims 1 or 2,
**characterized in that**
the granulate fraction in the slurry amounts to at least 5 vol.-%, and preferably to at least 10 vol.-% and/or to a maximum of 40 vol.-%.

4. Method according to either of claims 1 to 3,
**characterized in that**
a nickel oxide is used as metal oxide.

5. Method according to either of claims 1 to 4,
**characterized in that**
an yttrium stabilized zirconium dioxide is used as solid electrolyte material.

6. Method according to one of the preceding claims,
**characterized in that**
a powder consisting of a solid electrolyte material is used in addition to the granulates.

7. Method according to one of the preceding claims,
**characterized in that**
the average diameter of the powder grains amounts to up to 1 µm.

8. Method according to one of the preceding claims,
**characterized in that**
dispersion agents are admixed to the slurry.

9. Method according to one of the preceding claims,
**characterized in that**
a binder or a binder system is admixed to the slurry.

10. Method according to one of the preceding claims,
**characterized in that**
the average diameter of the granulate grains amounts to at least 10 µm.

11. Method according to one of the preceding claims,
**characterized in that**
the average diameter of the pores of the granulate grains is by at least five times larger than the average diameter of the metal oxide powder grains, and preferably by a maximum value of ten times larger.

12. Method according to one of the preceding claims,
**characterized in that**
the average diameter of the pores of the granulate grains is larger than the average diameter of the metal oxide powder grains by a maximum value of one hundred.

13. Method according to one of the preceding claims,
**characterized in that**
the granulate is calcined before it is admixed to the slurry.

14. Method according to one of the preceding claims,
**characterized in that**
the granulate comprises pores having an average size of about 0.1 µm to 0.2 µm.

15. Method according to one of the preceding claims,
**characterized in that**
the pores of the granulates are open.

16. Method according to one of the preceding claims,
**characterized in that**
the granulates have a strength so high that they may withstand substantially without damage the foil casting slurry preparation.

17. Method according to one of the preceding claims,
**characterized in that**
the slurry is formed by means of the following steps: dispersion of a metal oxide powder and subsequently admixture and dispersion of the granulates of the solid electrolyte material and thereafter admixture and dispersion of the powder portion of the solid electrolyte material.

18. Method according to one of the preceding claims,
**characterized in that**
the slurry is formed by means of the following steps: dispersion of a metal oxide powder and subsequently admixture and dispersion of the metal oxide powder and subsequently admixture and dispersion of the powder fraction of the solid electrolyte material.

19. Method according to one of the preceding claims,
**characterized in that**
the green compact is sintered at temperatures of more than 1,300° C, and in particular at temperatures of more than 1,400° C.

## Revendications

1. Procédé pour produire une électrode utilisée à hautes températures dans lequel est formé un compact vert d'une électrode à partir d'une suspension céramique, cette suspension consistant d'au moins d'une matière électrolytique solide et d'une poudre d'oxide métallique et dans lequel le compact vert est séché et fritté,
**caractérisé en ce que**
un granulé poreux d'une matière électrolytique solide est introduite dans la suspension, et le diamètre moyen des grains de la poudre métallique d'oxide n'est pas plus grand ou n'est pas essentiellement plus grand que le diamètre des pores des granulés, permettant ainsi d'introduire sans problème les grains de la poudre de l'oxide métallique dans les pores des granulés.

2. Procédé suivant la revendication 1,
**caractérisé en ce que**
la fraction de l'oxide métallique s'élève à une valeur d'au moins 20 % volumique, et de préférence à une valeur d'au moins 30 % volumique.

3. Procédé suivant l'une des revendications 1 ou 2,
**caractérisé en ce que**
la fraction des granulés dans la suspension s'élève à une valeur d'au moins 5 % volumique, de préférence à au moins une valeur de 10 % volumique et/ ou à une valeur maximale de 40 % volumique.

4. Procédé suivant l'une des revendications 1 à 3,
**caractérisé en ce que**
un oxide de nickel est utilisé comme oxide métallique.

5. Procédé suivant l'une des revendications 1 à 4,
**caractérisé en ce que**
un dioxide de zirconium stabilisé à l'yttrium est utilisé comme matière électrolytique solide.

6. Procédé suivant l'une des revendications précédentes,
**caractérisé en ce que**
une poudre d'une matière électrolytique solide est utilisé en plus aux granulés.

7. Procédé suivant l'une des revendications précédentes,
**caractérisé en ce que**
le diamètre moyen des grains de la poudre s'élève jusqu'à une valeur de 1 µm.

8. Procédé suivant l'une des revendications précédentes,
**caractérisé en ce que**
des additifs dispersants sont mélangés à la dispersion.

9. Procédé suivant l'une des revendications précédentes,
**caractérisé en ce que**
un liant ou un système de liant est ajouté à la dispersion.

10. Procédé suivant l'une des revendications précédentes,
**caractérisé en ce que**
le diamètre moyen des grains du granulé s'élève à une valeur d'au moins 10 µm.

11. Procédé suivant l'une des revendications précédentes,
**caractérisé en ce que**
le diamètre moyen des pores des grains des granulés est cinq fois plus grand, et de préférence d'au moins dix fois plus grand que le diamètre moyen des grains de la poudre des grains d'oxide métallique.

12. Procédé suivant l'une des revendications précédentes,
**caractérisé en ce que**
le diamètre moyen des grains des granulés est au maximum cent fois plus grand que le diamètre moyen des grains de la poudre d'oxide métallique.

13. Procédé suivant l'une des revendications précédentes,
**caractérisé en ce que**
les granulés sont frittés avant d'être ajoutés à la suspension.

14. Procédé suivant l'une des revendications précédentes,
**caractérisé en ce que**
les granulés présentent des pores d'une taille moyenne variant entre 0,1 et 2,0 µm.

15. Procédé suivant l'une des revendications précédentes,
**caractérisé en ce que**
les granulés présentent des pores ouvertes.

16. Procédé suivant l'une des revendications précédentes,
**caractérisé en ce que**
les granulés présentent une résistance élevée telle qu'il peuvent résister essentiellement sans dommage à la préparation de la coulée de la feuille et de la suspension.

17. Procédé suivant l'une des revendications précédentes,
**caractérisé en ce que**
la suspension est formée au cours des étapes suivantes: dispersion d'une poudre d'oxide métallique, et ensuite l'ajout et la dispersion du granulé de l'ectrolyte solide et finalement l'ajout et la dispersion de la fraction de poudre de l'électrolyte solide.

18. Procédé suivant l'une des revendications précédentes,
**caractérisé en ce que**
la suspension est formée au cours des étapes suivantes: dispersion des granulés de l'électrolyte solide et ensuite l'ajout et la dispersion de la poudre d'oxide métallique et finalement l'addition et la dispersion de la fraction de poudre de l'électrolyte solide.

19. Procédé suivant l'une des revendications précédentes,
**caractérisé en ce que**
le compact vert est fritté à des températures au dessus d'une valeur de 1.300° C, et de préférence à des températures au dessus d'une valeur de 1.400° C.
